Europäisches Patentamt

(19) European Patent Office

Office européen des brevets

(11) Veröffentlichungsnummer: **0 134 516**
A2

(12) # EUROPÄISCHE PATENTANMELDUNG

(21) Anmeldenummer: 84108395.9

(22) Anmeldetag: 17.07.84

(51) Int. Cl.⁴: **H 01 S 3/03**

(30) Priorität: 20.07.83 DE 3326092

(43) Veröffentlichungstag der Anmeldung:
20.03.85 Patentblatt 85/12

(84) Benannte Vertragsstaaten:
DE FR GB IT NL SE

(71) Anmelder: HONEYWELL GMBH
Kaiserleistrasse 55
D-6050 Offenbach am Main(DE)

(72) Erfinder: Hansli, Werner, Dipl.-Ing.
Moosbergstrasse 30
D-6100 Darmstadt(DE)

(72) Erfinder: Baumann, Rainer, Dipl.-Phys.
Kilianstädter Strasse 13
D-6454 Bruchköbel 2(DE)

(74) Vertreter: Herzbach, Dieter et al,
Honeywell Europe S.A. Holding KG Patent- und
Lizenzabteilung Kaiserleistrasse 55 Postfach 184
D-6050 Offenbach am Main(DE)

(54) Gaslaser.

(57) Zur spannungsfreien und hochvakuumdichten Befestigung von Brewsterfenstern (14) und/oder Spiegeln (18, 20) an einem Gasentladungsrohr bzw. Resonatorblock (10) wird ein Indiumring (16, 16', 16") verwendet, wobei in den Indiumring ein Metallring als Anode (18) integriert werden kann.

Fig.2

EP 0 134 516 A2

0134516

HONEYWELL GmbH
Kaiserleistraße 55
D-6050 Offenbach am Main

16. Juli 1984
77100508 EP
Hz/ep

**Laser** BEZEICHNUNG GEÄNDERT

Die vorliegende Erfindung betrifft einen Laser nach dem Gattungsbegriff des Anspruches 1.

Ein Gas-Laser umfaßt beispielsweise ein in einem abstimmbaren Resonator angeordnetes, vakuumdicht abgeschlossenes Entladungsrohr, in welchem sich ein Gasgemisch, z.B. aus Helium und Neon befindet, welches z.B. mittels einer Anoden/Kathodenanordnung angeregt wird. Der Abschluß des Entladungsrohres erfolgt hierbei durch unter dem Brewsterwinkel angeordnete Fenster. Derartige Brewsterfenster gestatten den reflexionsfreien Durchtritt einer Polarisationsrichtung des Laserlichts. Ein solcher Laser kann beispielsweise dem Buch von Kleen/Müller "Laser" erschienen im Springer Verlag 1969, auf den Seiten 310 ff. entnommen werden. Aus dieser Literaturstelle ist ferner das Problem der Wanddiffusion bekannt, wobei der Heliumverlust aufgrund der Diffusion zu einer stark verminderten Lebensdauer des Lasers führt.

Um die Wanddiffusion gering zu halten, wird heutzutage das Entladungsrohr aus einem Material mit geringer Helium-Diffusionsrate hergestellt, wie z.B. aus Glaskeramik, welches unter den Warenzeichen "Zerodur" bzw. "Cervit" von bestimmten Firmen vertrieben wird.

Die Brewsterfenster bestehen dagegen aus streu- und absorptionsarmen Glas, wie z.B. Quarzglas, das gegenüber Quarzglas einen unterschiedlichen thermischen Ausdehnungskoeffizienten sowie eine höhere Helium-Diffusionsrate aufweist. Da andererseits die Brewsterfenster das Entladungsrohr vakuumdicht abschließen müssen, ergeben sich insbesondere beim Anschmelzen der Brewsterfenster an das Entladungsrohr

0134516

mechanische Spannungen, die eine Doppelbrechung des durchtretenden Laserlichts verursachen. Doppelbrechung führt zu elliptischer Polarisation des Laserlichts, zu magnetischer Empfindlichkeit und zu hohen Verlusten. Diese Doppelbrechung und somit die mechanischen Spannungen müssen daher unter allen Umständen vermieden werden.

In der zitierten Literaturstelle wird zu diesem Zweck vorgeschlagen, eine federnde Halbkugel an dem Entladungsrohr anzuformen, an der die Brewsterfenster angeschmolzen werden. Abgesehen davon, daß auf diese Weise die Spannungen nur teilweise isoliert werden, ist diese Lösung kostspielig, erfordert zusätzlichen Raum und führt aufgrund der vergrößerten Fensterfläche zu einer vergrößerten Helium-Diffusionsrate.

An gleicher Stelle wird vorgeschlagen, die Brewsterfenster mittels Epoxydharz auf das Entladungsrohr aufzukitten. Aufgrund der Elastizität dieses Klebstoffes ergibt sich zwar eine gute Spannungsisolierung; derartige Klebstoffe sind jedoch nicht hochvakuumtauglich, d.h. sie gasen stark aus und verunreinigen die Röhrengasfüllung, wodurch die Lebensdauer des Lasers stark herabgesetzt wird.

In der DE-OS 33 07 233 wurde ferner bereits eine Befestigung der Brewsterfenster an einem Laserröhrenblock durch "ansprengen", d.h. durch optisch/molekularen Kontakt vorgeschlagen, wobei die Kapillarbohrung an der Übergangsstelle zu dem Brewsterfenster mit einer Freibohrung und das Brewsterfenster mit konzentrischen Entlastungsrillen versehen ist, um etwaige Spannungen zu kompensieren. Durch die Entlastungsrillen und durch die angeordnete Freibohrung im Übergangsbereich zwischen Kapillarbohrung und Brewsterfenster wird die Helium-Diffusionsfläche des Brewsterfensters stark vergrößert, so daß diese Lösung ebenfalls noch verbesserungswürdig erscheint.

0134516

Ausgehend von diesen bekannten bzw. bereits vorgeschlagenen Lösungen ist es die Aufgabe der vorliegenden Erfindung, einen Laser der eingangs genannten Art so auszugestalten, daß die Anbringung der Brewsterfenster spannungsfrei erfolgen kann und die durch die Brewsterfenster vorgegebene Diffusionsfläche möglichst gering ist. Die Lösung dieser Aufgabe gelingt gemäß der im Anspruch 1 gekennzeichneten Erfindung. Weitere vorteilhafte Ausgestaltungen der Erfindung sind den Unteransprüchen entnehmbar.

Die Verwendung des Indium/Gold-Verfahrens im Zusammenhang mit Lasern ist an sich bekannt. Dieses wird bislang bereits verwendet, um die metallische Kathode bzw. Anode(n) an dem Laserblock anzubringen. Die Verwendung von Indium/Gold bzw. von Indium alleine zur Befestigung der Brewsterfenster an dem Laserblock ist jedoch neu und besitzt wesentliche Vorteile.

Zunächst ist Indium/Gold ein sehr duktiles und leicht fließendes Material, so daß praktisch keine Spannungen in dem Brewsterfenster entstehen. Selbst bei stark unterschiedlichen Wärmeausdehnungen von Brewsterfenster-, Röhrenblock- und Verbindungsmaterial ergibt sich praktisch keine Doppelbrechung des durchtretenden Lichts.

Die Befestigung der Brewsterfenster mittels Indium/Gold ist zudem billig, da die Verbindungsoberflächen von Brewsterfenster und Röhrenblock nicht so genau plangearbeitet werden müssen, wie dies beispielsweise bei einem optischen Kontakt der Fall ist. Trotzdem ergibt sich bei der Befestigung mittels Indium/Gold eine ebensogute Vakuumdichte, wie bei einem optischen Kontakt. Indium/Gold ist darüber hinaus hochvakuumtauglich, d.h. es besitzt keine im Hochvakuum ausgasende Bestandteile.

Schließlich ist die Helium-Diffusion aufgrund der entfallenden Röhrenfreibohrung und der entfallenden Entlastungsrillen sehr viel geringer, da die Diffusionsfläche geringer ist. Dies führt zu einer längeren Lebensdauer der Laserröhre gegenüber einer Befestigung mittels eines optischen Kontaktes. Letztlich ist bei einer Befestigung mit Indium ein Austausch der Brewsterfenster relativ einfach möglich.

Anhand der beiden Figuren der beiliegenden Zeichnung sei im folgenden die Erfindung näher erläutert. Es zeigen:

Fig. 1 die Befestigung des Brewsterfensters an einem Laserröhrenblock gemäß der Erfindung;

Fig. 2 eine Modifikation gegenüber Fig. 1; und

Fig. 3 eine durch Spiegel abgeschlossene Laserröhre.

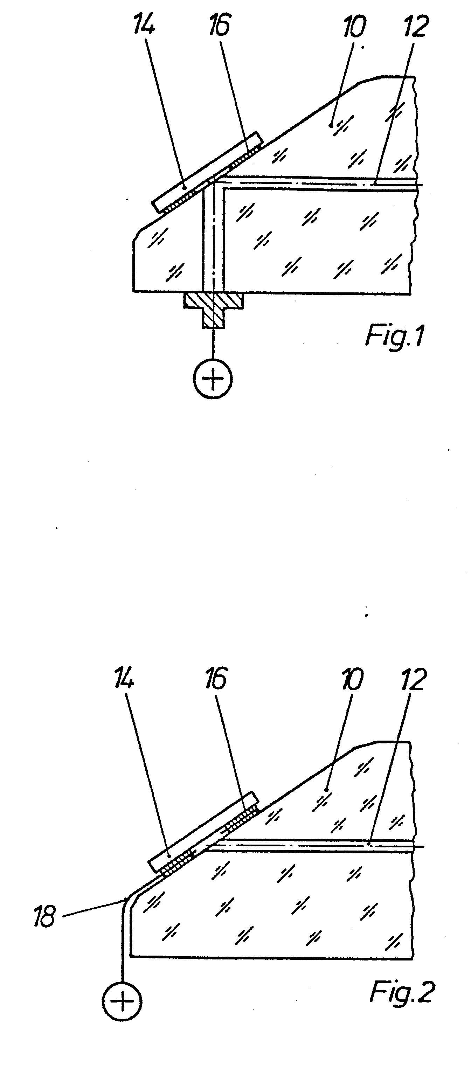

Gemäß Fig. 1 weist ein Block 10 aus Glaskeramikmaterial, von dem nur ein Teil dargestellt ist, eine Kapillarbohrung 12 auf, die mit einem Helium/Neon-Gasgemisch gefüllt ist. Die Anregung dieses Gasgemisches erfolgt über im Bereich des Endes der Kapillarbohrung 12 angeordnete Anoden und eine in der Mitte des Blockes 10 angeordnete Kathode. An jedem Ende ist der Block 10 unter dem Brewsterwinkel angeschliffen. Auf die Anschlifffläche ist konzentrisch zur Kapillarbohrung 12 ein Ring 16 aus Indium gelegt, auf welchen das Brewsterfenster 14 gesetzt ist. Die Befestigung der Teile miteinander kann mit dem Gold-Indium-Lötverfahren erfolgen.

Bei der Ausführung gemäß Fig. 2 werden die Indiumringe 16, in welche ein Metallring eingebettet sein kann, als Anoden 18 verwendet. Die Lösung ist besonders vorteilhaft, da bei unveränderter Länge des Blockes 10 die verstärkende Laserröhrenlänge vergrößert wird und gesonderte Anodenbohrungen entfallen können.

Neben der Befestigung von Brewsterfenstern ist die erfindungsgemäße Befestigungstechnik auch von Interesse beim Anbringen von Spiegeln an einem

das Gasentladungsrohr integriert oder modular aufweisenden Resonatorblock, der ebenfalls aus dem eingangs erwähnten glaskeramischen Material besteht. Die Spiegel bestehen hierbei vorzugsweise aus Glaskeramik oder Quarzglas.

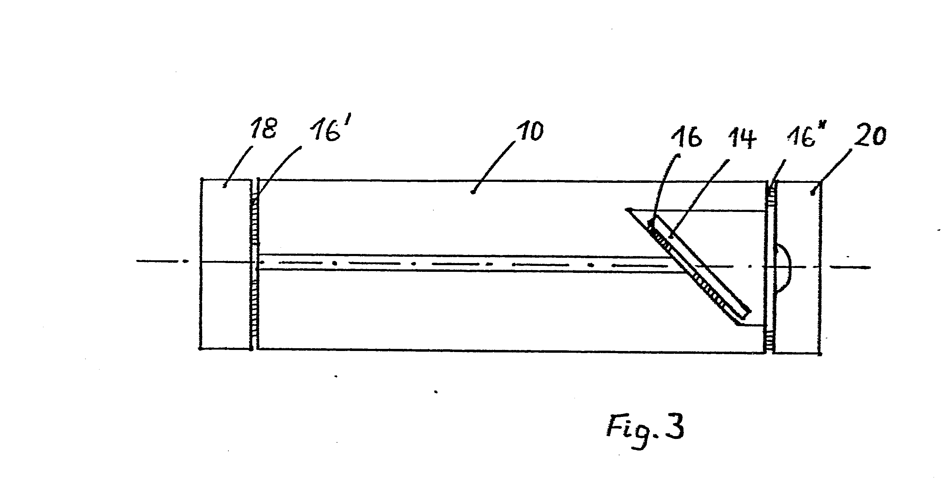

Figur 3 zeigt eine derartige Laserröhre 10, die durch einen Planspiegel 18 auf der einen Seite und durch einen teildurchlässigen sphärischen Spiegel 20 auf der anderen Seite abgeschlossen ist. Beide Spiegel 18, 20 sind über Indiumringe 16', 16'' mit der aus Glaskeramik bestehenden Laserröhre 10 befestigt. Die mit Indium befestigten Spiegel 18, 20 können durch eine mechanische Vorrichtung beispielsweise durch ein piezoelektrisches Stellglied zur optimalen Resonatorjustierung bzw. zur Resonatorlängenkontrolle noch geringfügig verkippt bzw. verschoben werden. Innerhalb der Laserröhre ist in einer Ausnehmung 20 das Brewsterfenster 14 angeordnet, welches mit dem Indiumring 16 befestigt ist und hierbei als Lichtpolarisator dient.

**0134516**

<u>Patentansprüche</u>:

1. Laser mit einem durch Brewsterfenster und/oder Spiegel abgeschlossenen Gasentladungsrohr bzw. Resonatorblock, wobei das Gasentladungsrohr bzw. der Resonatorblock und das Brewsterfenster bzw. der Spiegel aus Glaskeramik, Oxydkeramik oder Glas besteht, d a d u r c h g e - k e n n z e i c h n e t , daß jeweils das Brewsterfenster (14) bzw. der Spiegel (18, 20) unter Zwischenfügung von Indium (16, 16', 16'') an dem Gasentladungsrohr bzw. Resonatorblock (10) befestigt sind.

2. Laser nach Anspruch 1, bei dem das Gasentladungsrohr durch eine Kapillarbohrung in einem Glaskeramikblock gebildet wird und bei dem die Brewsterfenster aus die Kapillarbohrung unter dem Brewsterwinkel abschließenden Glasplatten bestehen, g e k e n n z e i c h n e t d u r c h jeweils eine dünne ringförmige Indiumschicht (16) konzentrisch zu der Kapillarbohrung (12) zwischen dem Glaskeramikblock (10) und der Glasplatte (14).

3. Laser nach Anspruch 1, d a d u r c h g e k e n n - z e i c h n e t , daß die Indiumschicht (16) mit einem integrierten Metallring als Anode (18) verwendet wird.

4. Laser nach Anspruch 1 oder einem der folgenden, g e - k e n n z e i c h n e t d u r c h Anwendung des Gold- Indium-Lötverfahrens bei der Anbringung der Brewsterfenster (14) bzw. der Spiegel (18, 20).

0134516

Fig.1

Fig.2

Honeywell

Fig. 3